# EUROPEAN PATENT APPLICATION

(11) **EP 4 005 911 A1**
(43) Date of publication of application: **01.06.2022**
(21) Application number: 20846642.5
(22) Date of filing: 25.06.2020
(51) Int. Cl.: B62K 23/06, B62L 3/02, B62M 25/04, G05G 25/00, G05G 1/04, B60T 7/02, B60T 11/18

(54) **OPERATION AMOUNT DETECTION DEVICE FOR HANDLEBAR VEHICLE**

(30) Priority: 31.07.2019 JP 2019140825
(71) Applicant: Hitachi Astemo, Ltd., Ibaraki 312-8503 (JP)
(72) Inventor: ATSUTA Daiki, Hitachinaka-shi, Ibaraki 312-8503 (JP)
(74) Representative: Dehns
(86) International application number: PCT/JP2020/024967
(87) International publication number: WO 2021/019978

(57) **Abstract**

An operation amount detection device (50) is used in a vehicle with handlebar in which a pivot (40) fixed to a holder (10) is inserted into one end of a pivot insertion hole (25) of a brake lever (20A), with the brake lever (20A) being freely rotatable about an axis of the pivot (40). The operation amount detection device (50) includes a rotation angle sensor (51) fixed to the holder (10) and a detection shaft (52) fitted into another end of the pivot insertion hole (25). A center axis of the pivot (40) and a center axis of the detection shaft (52) are arranged coaxially, the brake lever (20A) and the detection shaft (52) co-rotate, and the rotation angle sensor (51) detects a rotation angle of the detection shaft (52). According to this configuration, a structure around the brake lever (20A) can be made simple and lightweight.

## Description

### Technical Field

The present disclosure relates to an operation amount detection device for a vehicle with handlebar.

### Background Art

A vehicle with handlebar is provided with an operation amount detection device for detecting an operation amount of a brake lever.

An operation amount detection device in the related art includes a rotation angle sensor attached to a handlebar and a connection arm having one end connected to a brake lever and another end connected to the rotation angle sensor (for example, see PTL 1).

In the operation amount detection device, the other end of the connection arm rotates in conjunction with the brake lever, and the rotation angle sensor detects a rotation angle of the other end of the connection arm, thereby detecting the operation amount of the brake lever.

### Citation list

### Patent Literature

PTL 1: Japanese Patent No. 6148273

### Summary of Invention

### Technical Problem

In the operation amount detection device in the related art, there is a problem that it is necessary to machine an attachment hole of the connection arm in the brake lever, and a weight of the connection arm is increased around the brake lever.

An object of the disclosure is to provide an operation amount detection device for a vehicle with handlebar, which can solve the above problem and can make a structure around an operator simple and lightweight.

### Solution to Problem

To solve the problem, the disclosure is an operation amount detection device for a vehicle with handlebar in which a pivot fixed to a holder attached to a vehicle body is inserted into one end of a pivot insertion hole of an operator, and the operator is freely rotatable about an axis of the pivot. The operation amount detection device includes a rotation angle sensor fixed to the holder and a detection shaft fitted into another end of the pivot insertion hole. A center axis of the pivot and a center axis of the detection shaft are arranged coaxially, the operator and the detection shaft co-rotate, and the rotation angle sensor is configured to detect a rotation angle of the detection shaft.

In the operation amount detection device of the disclosure, since the detection shaft is inserted into the pivot insertion hole of the operator, the detection shaft and the rotation angle sensor can be compactly arranged around the operator and thus the detection shaft can be made lightweight. In addition, since the detection shaft is arranged by using the pivot insertion hole for rotating the operator, it is not necessary to machine a dedicated hole for attaching the detection shaft on the operator.

In the above operation amount detection device for the vehicle with handlebar, it is preferable that an annular member is press-fitted into the pivot insertion hole, and the detection shaft is fitted into the annular member, so that the operator, the annular member, and the detection shaft co-rotate.

With this configuration, the annular member is such machined that the detection shaft is fitted thereto, and the annular member is press-fitted into the pivot insertion hole, so that the pivot insertion hole can be easily machined, and thus a machining cost of the operator can be reduced.

The above operation amount detection device for the vehicle with handlebar is applicable to a configuration in which the operator includes: a lever body; a knocker connected to a master cylinder or a connection member; and a grip margin adjustment mechanism configured to adjust a position of the lever body with respect to the knocker about the axis of the pivot. In this case, the pivot insertion hole is formed in the lever body and the knocker, and the lever body and the knocker are freely rotatable about the axis of the pivot.

In the above operation amount detection device for the vehicle with handlebar, it is preferable that an annular member is press-fitted into the pivot insertion hole of the lever body and the knocker, and the detection shaft is fitted into the annular member, so that the lever body, the knocker, the annular member, and the detection shaft co-rotate.

With this configuration, the annular member is such machined that the detection shaft is fitted thereto, and the annular member is press-fitted into the pivot insertion hole, so that the pivot insertion hole can be easily machined, and thus the machining cost of the operator can be reduced. In addition, since the lever body and the knocker are integrated by the annular member, an operation of assembling the operator is facilitated.

In the above operation amount detection device for the vehicle with handlebar, it is preferable that a fitting hole having a polygonal shaft cross section is formed in the annular member, a fitting portion having a polygonal shaft cross section is formed on the detection shaft, and the fitting portion of the detection shaft is fitted into the fitting hole of the annular member. With this configuration, the annular member and the detection shaft can be reliably connected and co-rotate.

### Advantageous Effect

In the operation amount detection device for the vehicle with handlebar of the disclosure, an operation amount of the operator can be accurately detected, and a structure around the operator can be made simple and lightweight.

### Brief Description of Drawings

[FIG. 1] FIG. 1 is an overall configuration diagram showing a vehicle control device according to a first embodiment of the disclosure.
[FIG. 2] FIG. 2 is a plan view showing a brake lever and an operation amount detection device according to the first embodiment of the disclosure.
[FIG. 3] FIG. 3 is a front view showing the brake lever and the operation amount detection device according to the first embodiment of the disclosure.
[FIG. 4] FIG. 4 is a sectional view taken along a line IV-IV of FIG. 3 showing the operation amount detection device according to the first embodiment of the disclosure.
[FIG. 5] FIG. 5 is an exploded perspective view of a pivot, an annular member, and a detection shaft according to the first embodiment of the disclosure.
[FIG. 6] FIG. 6 is an overall configuration diagram showing a vehicle control device according to a second embodiment of the disclosure.
[FIG. 7] FIG. 7 is a plan view showing a brake lever and an operation amount detection device according to the second embodiment of the disclosure.
[FIG. 8] FIG. 8 is a front view of the brake lever and the operation amount detection device according to the second embodiment of the disclosure.
[FIG. 9] FIG. 9 is a sectional view taken along a line IX-IX of FIG. 8 showing the operation amount detection device according to the second embodiment of the disclosure.
[FIG. 10] FIG. 10 is an exploded perspective view showing a pivot, an annular member, and a detection shaft according to the second embodiment of the disclosure.

### Description of Embodiments

Embodiments of the disclosure will be described in detail with reference to drawings as appropriate.

In the description of each embodiment, the same constitution elements are designated by the same reference numerals, and duplicate description will be omitted.

### [First Embodiment]

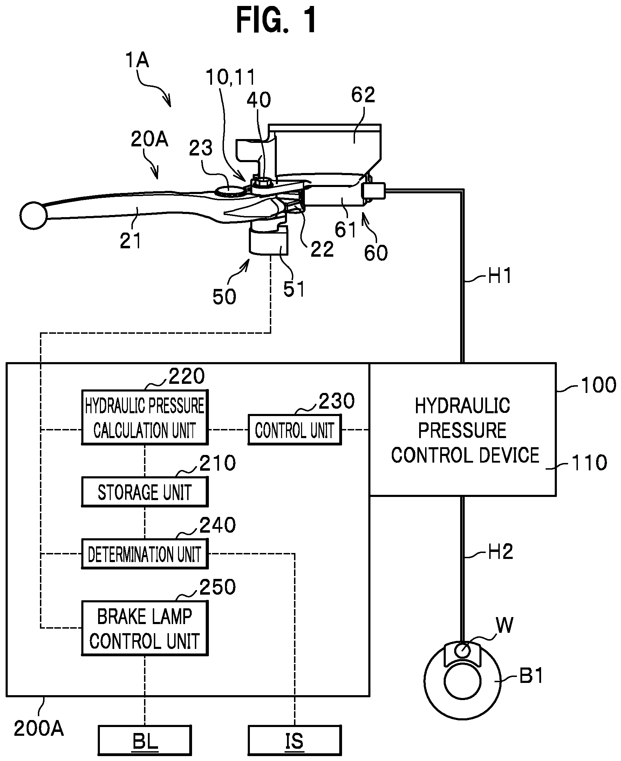

As shown in FIG. 1, a control device 1A for a vehicle with handlebar (hereinafter, simply referred to as a "vehicle control device") according to a first embodiment is used in a handlebar type vehicle such as a motorcycle, a three-wheeled motorcycle vehicle, or an all-terrain vehicle (ATV).

The vehicle control device 1A constitutes a hydraulic pressure brake system on a front wheel side or a rear wheel side of the vehicle with handlebar.

The vehicle control device 1A according to the first embodiment includes a holder 10, a brake lever 20A (referred to as an "operator" in claims), an operation amount detection device 50, a master cylinder 60, a hydraulic pressure control device 100, an electronic control device 200A, and a wheel brake B1.

The wheel brake B1 of the vehicle control device 1A is a hydraulic pressure disc brake in which a braking force is generated on wheels when pads sandwich a disc by a brake hydraulic pressure acting on a wheel cylinder W.

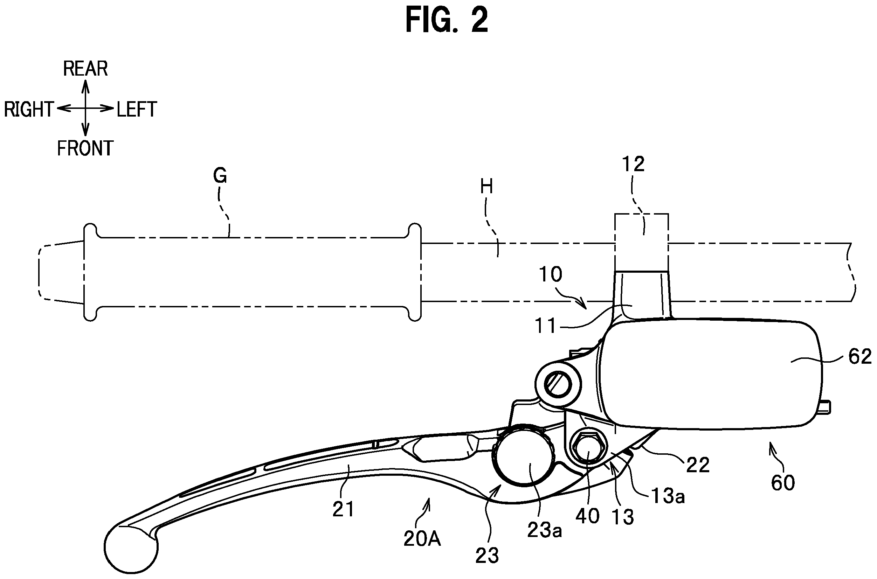

As shown in FIG. 2, the holder 10 is divided into a holder body 11 and a fixing member 12. Then, the holder body 11 is arranged on a front side of a handlebar H, the fixing member 12 is arranged on a rear side of the handlebar H, and the holder body 11 and the fixing member 12 are connected by bolts (not shown). Therefore, the holder 10 is fixed to the handlebar H by sandwiching the handlebar H between the holder body 11 and the fixing member 12.

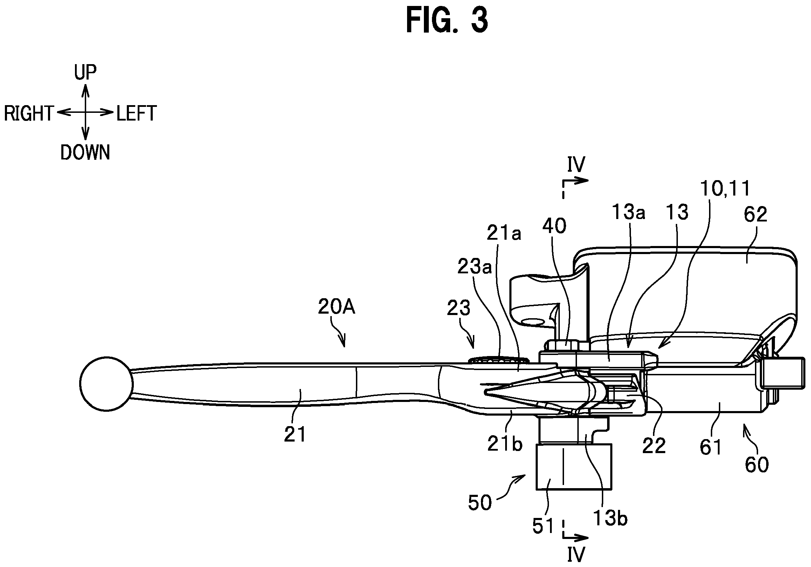

A lever connection portion 13 for connecting the brake lever 20A is formed on a front portion of the holder body 11. As shown in FIG. 3, the lever connection portion 13 is formed with an upper plate portion 13a and a lower plate portion 13b at an interval in an up-down direction.

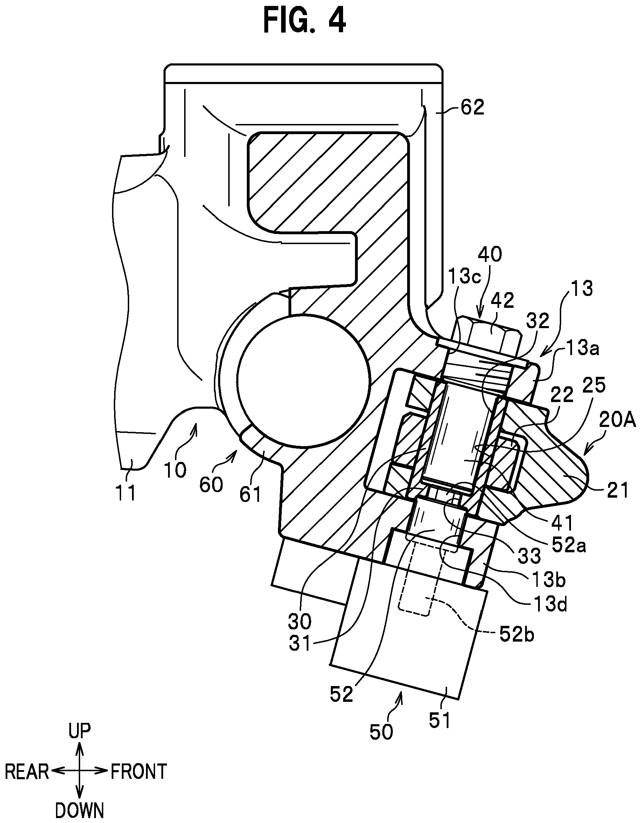

As shown in FIG. 4, a pivot fixing hole 13c penetrates the upper plate portion 13a in the up-down direction. The pivot fixing hole 13c is a screw hole into which a bolt portion 42 of a pivot 40 to be described later is screwed.

A shaft insertion hole 13d penetrates the lower plate portion 13b in the up-down direction. The shaft insertion hole 13d is a through hole through which a detection shaft 52 to be described later is inserted.

A center axis of the pivot fixing hole 13c and a center axis of the shaft insertion hole 13d are arranged coaxially.

As shown in FIG. 3, a cylinder 61 and a reservoir 62 of the master cylinder 60 are integrally formed on the holder body 11 according to the first embodiment.

The master cylinder 60 generates a brake hydraulic pressure corresponding to a force applied to the brake lever 20A by a driver.

A piston (not shown) is inserted in the cylinder 61. In addition, as shown in FIG. 1, the cylinder 61 is connected to the hydraulic pressure control device 100 via a pipe H1.

As shown in FIG. 2, the brake lever 20A includes a lever body 21, a knocker 22, and a grip margin adjustment mechanism 23.

The lever body 21 is a rod-shaped member arranged along the handlebar H, and is a portion operated by the driver with his/her finger.

As shown in FIG. 3, an upper portion 21a and a lower portion 21b are formed at a base portion of the lever body 21 at intervals in the up-down direction.

The knocker 22 is a member connected to the base portion of the lever body 21 and connected to the master cylinder 60. A part of the knocker 22 is arranged between the upper portion 21a and the lower portion 21b of the lever body 21.

A projection portion (not shown) is formed on a side surface of the knocker 22. The projection portion is inserted into the cylinder 61 of the master cylinder 60 and is in contact with the piston (not shown) in the cylinder 61.

As shown in FIG. 4, a pivot insertion hole 25 having a circular shaft cross section penetrates the upper portion 21a and the lower portion 21b of the lever body 21, and the knocker 22 in the up-down direction. An annular member 30 is press-fitted into the pivot insertion hole 25.

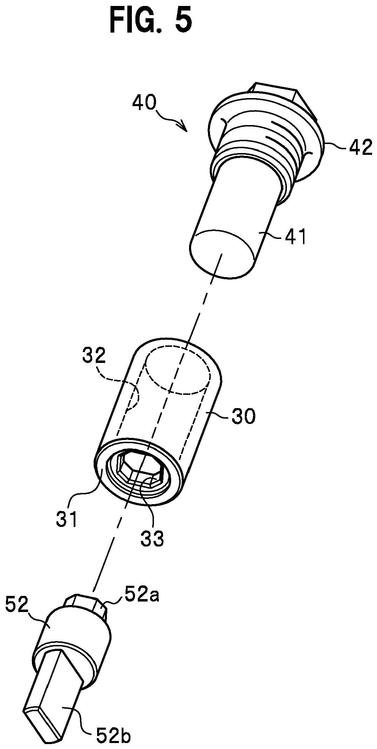

The annular member 30 is a bottomed cylindrical cylinder (see FIG. 5). The annular member 30 is press-fitted into the pivot insertion hole 25 in a state where a bottom portion 31 is arranged on a lower side. An outer peripheral surface of the annular member 30 and an inner peripheral surface of the pivot insertion hole 25 are pressure-welded such that the annular member 30 and the brake lever 20A (the lever body 21 and the knocker 22) co-rotate.

As shown in FIG. 5, the annular member 30 is formed with a bearing hole 32 having a circular shaft cross section. The bearing hole 32 is open on an upper end surface of the annular member 30. A fitting hole 33 having a polygonal shaft cross section penetrates a central portion of the bottom portion 31 of the annular member 30 in the up-down direction.

The pivot 40 is a shaft member inserted into the pivot insertion hole 25. The pivot 40 is formed with a support shaft portion 41 having a circular shaft cross section and the bolt portion 42 formed on a base end side of the support shaft portion 41.

As shown in FIG. 4, the pivot 40 is inserted into the pivot fixing hole 13c of the holder body 11 from above, and the bolt portion 42 is screwed into the pivot fixing hole 13c. Therefore, the pivot 40 is fixed to the holder body 11.

The support shaft portion 41 of the pivot 40 is inserted into the bearing hole 32 of the annular member 30. The annular member 30 is rotatably connected to the support shaft portion 41 about an axis.

Therefore, the support shaft portion 41 of the pivot 40 is inserted into the pivot insertion hole 25. Then, the annular member 30, the lever body 21, and the knocker 22 are rotatably connected to the support shaft portion 41 of the pivot 40 about the axis.

In the vehicle control device 1A according to the first embodiment, as shown in FIG. 2, the pivot 40 is fixed to the holder 10, and the lever body 21 and the knocker 22 of the brake lever 20A are freely rotatable about the axis of the pivot 40. Then, when the brake lever 20A is rotated from an initial position toward a handlebar H side, the piston (not shown) of the master cylinder 60 is pushed by the knocker 22, and the brake hydraulic pressure is generated in the master cylinder 60.

The brake lever 20A is provided with the grip margin adjustment mechanism 23. The grip margin adjustment mechanism 23 includes a dial 23a attached to the base portion of the lever body 21.

A pin (not shown) protrudes laterally from the dial 23a, and a tip portion of the pin is in contact with the side surface of the knocker 22. The grip margin adjustment mechanism 23 is configured to change an amount of protrusion of the pin when the dial 23a is rotated.

In the grip margin adjustment mechanism 23, a position of the lever body 21 with respect to the knocker 22 can be changed about the axis of the pivot 40 by rotating the dial 23a.

By adjusting an inclination angle of the lever body 21 with respect to the knocker 22 using the grip margin adjustment mechanism 23, it is possible to adjust a distance (grip margin) between the lever body 21 in an initial state of the brake lever 20A and a grip G of the handlebar H.

As shown in FIG. 4, the operation amount detection device 50 detects a rotation amount of the brake lever 20A. The operation amount detection device 50 includes a rotation angle sensor 51 fixed to the holder 10 and the detection shaft 52 fitted into a lower end portion of the pivot insertion hole 25.

The detection shaft 52 is inserted into the shaft insertion hole 13d of the holder body 11. The detection shaft 52 is freely rotatable about an axis with respect to the shaft insertion hole 13d. A rotation center axis of the pivot 40 and a rotation center axis of the detection shaft 52 are arranged coaxially.

A fitting portion 52a protrudes from a central portion of an upper end surface of the detection shaft 52. The fitting portion 52a has a polygonal shaft cross section and is fitted into the fitting hole 33 of the annular member 30.

Therefore, the detection shaft 52 is fitted into the pivot insertion hole 25 via the annular member 30. Then, the detection shaft 52, the annular member 30, the lever body 21, and the knocker 22 co-rotate about the axis of the pivot 40.

A detection portion 52b protrudes from a central portion of a lower end surface of the detection shaft 52. The detection portion 52b has a rectangular shaft cross section.

The rotation angle sensor 51 detects a rotation angle of the detection shaft 52. The rotation angle sensor 51 is fixed to a lower surface of the lower plate portion 13b of the holder body 11 by the bolts (not shown). The detection portion 52b of the detection shaft 52 is inserted in the rotation angle sensor 51.

The rotation amount of the brake lever 20A can be detected by detecting the rotation angle of the detection shaft 52 with the rotation angle sensor 51.

As shown in FIG. 1, the rotation angle sensor 51 is electrically connected to the electronic control device 200A to be described later. The rotation amount of the brake lever 20A detected by the rotation angle sensor 51 is output to the electronic control device 200A.

The initial position of the brake lever 20A is set in the operation amount detection device 50. The initial position of the brake lever 20A is a return position of the brake lever 20A after the brake lever 20A is operated and rotated a plurality of times in a state where the brake lever 20A is assembled to the handlebar H. Therefore, it is possible to accurately detect the rotation amount of the brake lever 20A by setting the initial position of the brake lever 20A in a state where components of the vehicle control device 1A are fitted to each other.

In the vehicle control device 1A as described above, as shown in FIG. 4, the rotation angle sensor 51 detects the rotation angle of the detection shaft 52 that rotates in conjunction with the brake lever 20A, so that an operation amount of the brake lever 20A can be accurately detected.

In the operation amount detection device 50 according to the first embodiment, since the detection shaft 52 is inserted into the pivot insertion hole 25 of the brake lever 20A, the detection shaft 52 and the rotation angle sensor 51 can be compactly arranged around the brake lever 20A. Therefore, the detection shaft 52 can be made simple, and thus the operation amount detection device 50 can be made lightweight.

In the operation amount detection device 50 according to the first embodiment, since the detection shaft 52 is arranged by virtue of the pivot insertion hole 25 for rotating the brake lever 20A, it is not necessary to machine a dedicated hole for attaching the detection shaft 52 into the brake lever 20A.

In the operation amount detection device 50 according to the first embodiment, the shaft cross section of the fitting hole 33 of the annular member 30 and the shaft cross section of the fitting portion 52a of the detection shaft 52 are formed in a polygonal shape (see FIG. 5). With this configuration, by fitting the fitting portion 52a into the fitting hole 33, the annular member 30 and the detection shaft 52 can be reliably connected and co-rotate.

In the operation amount detection device 50 according to the first embodiment, since the fitting hole 33 having the polygonal shaft cross section is machined in the annular member 30, and the annular member 30 is press-fitted into the pivot insertion hole 25, the pivot insertion hole 25 can be easily machined. Thus, a machining cost of the brake lever 20A can be reduced. In addition, since the lever body 21 and the knocker 22 are integrated by the annular member 30, an operation of assembling the brake lever 20A is facilitated.

Although a structure of the vehicle control device 1A according to the first embodiment of the disclosure has been described above, the disclosure is not limited to the first embodiment, and modifications may be appropriately made without departing from the scope of the disclosure.

In the vehicle control device 1A according to the first embodiment, as shown in FIG. 2, the brake lever 20A is provided with the grip margin adjustment mechanism 23, but the brake lever 20A may not be provided with the grip margin adjustment mechanism 23. In this case, since it is not necessary to divide the brake lever 20A into the lever body 21 and the knocker 22, the brake lever 20A is formed of an integral member.

In the operation amount detection device 50 according to the first embodiment, as shown in FIG. 4, the detection shaft 52 and the rotation angle sensor 51 are configured separately, but the rotation angle sensor 51 in which the detection shaft 52 is incorporated may be used.

In the operation amount detection device 50 according to the first embodiment, although the detection shaft 52 is fitted into the fitting hole 33 of the annular member 30, the detection shaft 52 may be fitted directly into the pivot insertion hole 25.

In the first embodiment, as shown in FIG. 2, although the operation amount detection device 50 applicable to the hydraulic pressure brake system having the brake lever 20A has been described, an operation amount detection device of the disclosure can also be applied to a hydraulic pressure brake system having a brake pedal.

In the operation amount detection device 50 according to the first embodiment, although the rotation amount of the brake lever 20A is detected, the operation amount detection device of the disclosure is applicable to various operators provided on the vehicle with handlebar. For example, when the operation amount detection device is configured to detect a rotation amount of a clutch lever, the rotation amount of the clutch lever can be detected under various conditions such as when the vehicle with handlebar is started, when the vehicle with handlebar is running, and when the vehicle with handlebar is stopped.

Next, a brake control in the vehicle control device 1A according to the first embodiment will be described.

As shown in FIG. 1, the vehicle control device 1A according to the first embodiment includes the hydraulic pressure control device 100 and the electronic control device 200A.

The hydraulic pressure control device 100 can perform an anti-lock brake control that suppresses wheel lock by increasing, decreasing, or holding the brake hydraulic pressure of the wheel brake B1. In addition, the hydraulic pressure control device 100 may also perform an interlocking brake control in which a braking force is generated in the wheel brake B1 in conjunction with other wheel brakes.

The hydraulic pressure control device 100 has a metal substrate 110, and a hydraulic pressure path is formed inside the substrate 110. The master cylinder 60 is connected to an inlet port of the substrate 110 via the pipe H1. In addition, the wheel cylinder W is connected to an outlet port of the substrate 110 via a pipe H2. In addition, a plurality of solenoid valves, an electric motor, and the electronic control device 200A are attached to the substrate 110.

The electronic control device 200A is a microcomputer including a central processing unit (CPU), a read-only memory (ROM), a random-access memory (RAM), and the like. The electronic control device 200A controls opening and closing of the solenoid valves and an operation of the electric motor of the hydraulic pressure control device 100, thereby executing the anti-lock brake control and the interlocking brake control.

The electronic control device 200A includes a storage unit 210, a hydraulic pressure calculation unit 220, a control unit 230, a determination unit 240, and a brake lamp control unit 250. A processing of each component in the electronic control device 200A is embodied by running a program stored in the storage unit 210 by the CPU.

The storage unit 210 stores hydraulic pressure data showing a corresponding relation between the rotation amount of the brake lever 20A and the brake hydraulic pressure generated from the master cylinder 60. In addition, the storage unit 210 stores a specified amount of the rotation amount of the brake lever 20A when an ignition switch IS is turned on.

The hydraulic pressure calculation unit 220 estimates the brake hydraulic pressure generated from the master cylinder 60 based on the rotation amount of the brake lever 20A detected by the operation amount detection device 50.

When the rotation amount of the brake lever 20A is input from the operation amount detection device 50, the hydraulic pressure calculation unit 220 calculates an estimated value of the brake hydraulic pressure corresponding to the detected rotation amount based on the hydraulic pressure data stored in the storage unit 210. Then, the hydraulic pressure calculation unit 220 outputs the estimated value of the brake hydraulic pressure to the control unit 230.

The control unit 230 controls the opening and closing of the solenoid valves and the operation of the electric motor of the hydraulic pressure control device 100 based on the estimated value of the brake hydraulic pressure input from the hydraulic pressure calculation unit 220, thereby executing the anti-lock brake control and the interlocking brake control.

The determination unit 240 determines an adjustment state of the wheel brake B1 based on the rotation amount of the brake lever 20A detected by the operation amount detection device 50 when the ignition switch IS is turned on.

The storage unit 210 stores the specified amount of the rotation amount of the brake lever 20A when the ignition switch IS is turned on. The specified amount is a rotation amount of the brake lever 20A in which the brake lever 20A is operated hard and the wheels are locked when the driver rotates the brake lever 20A in a state where the wheel brake B1 is normally adjusted.

In the present embodiment, the wheel brake B1 functions by rotating the brake lever 20A when a drive unit such as an engine or a motor of the vehicle with handlebar is started. At this time, the driver rotates the brake lever 20A until the brake lever 20A is operated hard to lock the wheels.

Then, when the ignition switch IS is turned on, in the case that the rotation amount of the brake lever 20A is greater than the specified amount, the brake lever 20A is not operated hard even in the case that the rotation amount of the brake lever 20A reaches the specified amount.

In this case, since a wear of the pad of the wheel brake B1 may be large or play of the brake lever 20A may be large, the determination unit 240 determines that the adjustment of the wheel brake B1 is necessary, and a determination result is displayed on a display unit such as a lamp or a monitor.

Furthermore, when the ignition switch IS is turned on, in the case that the rotation amount of the brake lever 20A is less than the specified amount, the brake lever 20A is operated hard before the rotation amount of the brake lever 20A reaches the specified amount.

In this case, even in a state where the brake lever 20A is not operated, since it is possible that the wheel brake B1 functions and, for example, the braking force is always generated by the wheel brake B1, the determination unit 240 determines that the adjustment of the wheel brake B1 is necessary, and the determination result is displayed on the display unit such as the lamp or the monitor.

The brake lamp control unit 250 turns on and off a brake lamp BL based on the rotation amount of the brake lever 20A detected by the operation amount detection device 50.

When the brake lever 20A is gripped and the rotation amount of the brake lever 20A reaches a predetermined amount, the brake lamp control unit 250 turns on the brake lamp BL. In addition, when the brake lever 20A is returned and the rotation amount of the brake lever 20A is less than the predetermined amount, the brake lamp control unit 250 turns off the brake lamp BL.

In the vehicle control device 1A as described above, since the brake hydraulic pressure generated from the master cylinder 60 can be detected without providing the hydraulic pressure sensor in the hydraulic pressure control device 100, the number of components of the hydraulic pressure control device 100 can be reduced.

In addition, in the vehicle control device 1A, the adjustment state of the wheel brake B1 can be determined and the brake lamp BL can be turned on with high accuracy based on the rotation amount of the brake lever 20A.

Although the control of the vehicle control device 1A according to the first embodiment of the disclosure has been described above, the disclosure is not limited to the first embodiment, and the modifications can be appropriately made without departing from the scope of the disclosure.

For example, in the electronic control device 200A, the adjustment state of the wheel brake B1 can also be determined based on the rotation amount of the brake lever 20A and an acceleration of a vehicle body. With this configuration, when the decrease in the acceleration of the vehicle body detected by an acceleration sensor is large even though the rotation amount of the brake lever 20A is small, the wheel brake B1 may be functioning even when the brake lever 20A is not operated, and thus the determination unit 240 determines that the wheel brake B1 needs to be adjusted.

In addition, when the operation amount detection device of the vehicle control device of the disclosure detects the rotation amount of the clutch lever, the electronic control device can determine an adjustment state of a clutch based on the rotation amount of the clutch lever.

### [Second Embodiment]

Next, a vehicle control device 1B according to a second embodiment will be described.

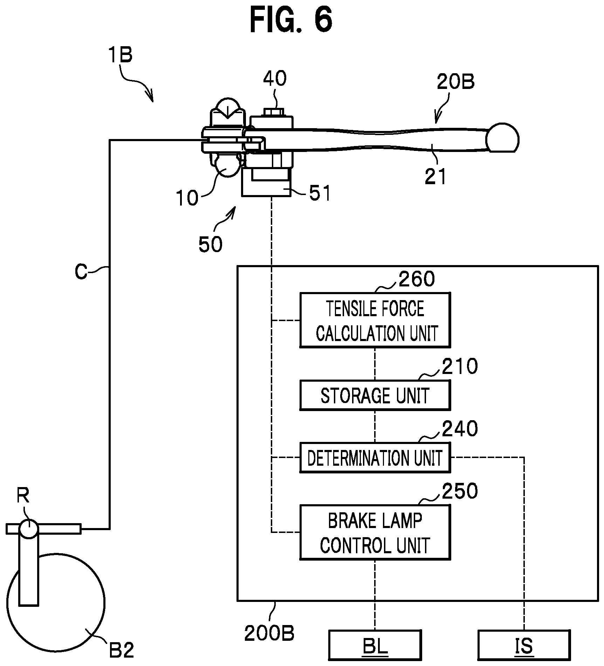

As shown in FIG. 6, the vehicle control device 1B according to the second embodiment constitutes a mechanical brake system on a front wheel side or a rear wheel side of the vehicle with handlebar.

The vehicle control device 1B according to the second embodiment includes the holder 10, a brake lever 20B (referred to as an "operator" in claims), the operation amount detection device 50, an electronic control device 200B, and a wheel brake B2.

The wheel brake B2 of the vehicle control device 1B is a mechanical drum brake. In the wheel brake B2, when a tensile force is applied to a brake cable C (referred to as a "connection member" in claims) by an operation of the brake lever 20B, a rod R is tilted and a brake shoe is pressed against an inner peripheral surface of a drum, so that a braking force is generated in wheels.

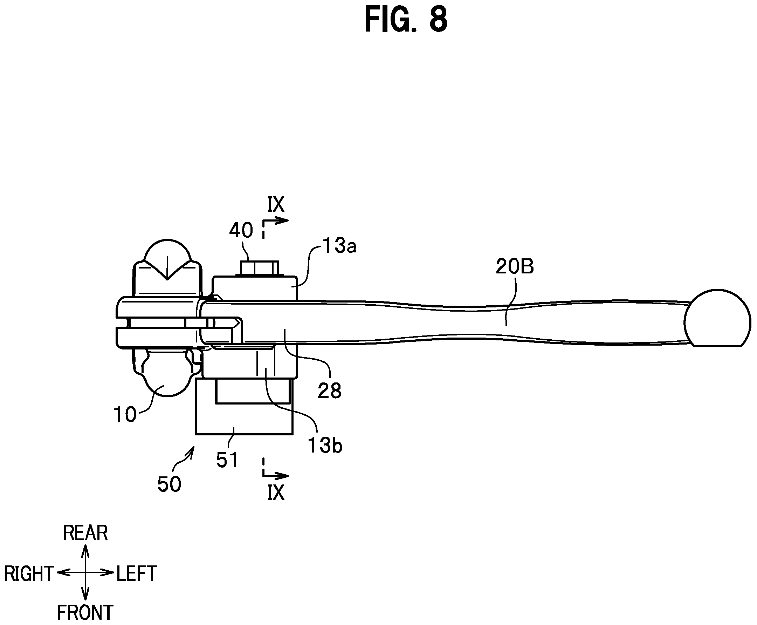

In the vehicle control device 1B according to the second embodiment, as shown in FIG. 8, a base portion 28 of the brake lever 20B is arranged between the upper plate portion 13a and the lower plate portion 13b of the lever connection portion 13 of the holder 10. As shown in FIG. 6, one end of the brake cable C is connected to the base portion 28 of the brake lever 20B.

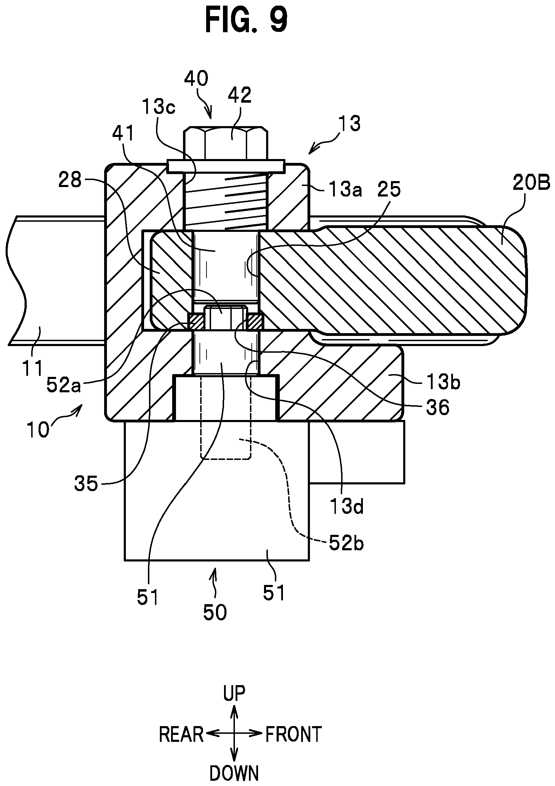

As shown in FIG. 9, the pivot insertion hole 25 penetrates the base portion 28 of the brake lever 20B in the up-down direction. An annular member 35 is inserted in a lower end portion of the pivot insertion hole 25.

The annular member 35 according to the second embodiment is an annular member. The annular member 35 is press-fitted into the lower end portion of the pivot insertion hole 25. An outer peripheral surface of the annular member 35 and an inner peripheral surface of the pivot insertion hole 25 are pressure-welded such that the annular member 35 and the brake lever 20B co-rotate.

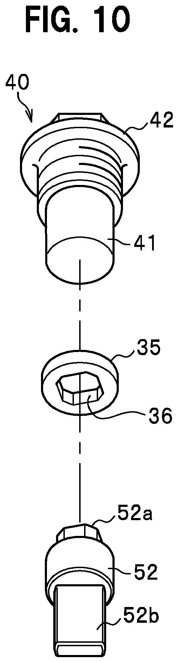

A fitting hole 36 having a polygonal shaft cross section penetrates a central portion of the annular member 35 according to the second embodiment (see FIG. 10).

In the pivot 40 according to the second embodiment, the support shaft portion 41 is inserted into the pivot insertion hole 25, and the bolt portion 42 is screwed into the pivot fixing hole 13c. Therefore, the base portion 28 of the brake lever 20B is rotatably connected to the support shaft portion 41 about an axis.

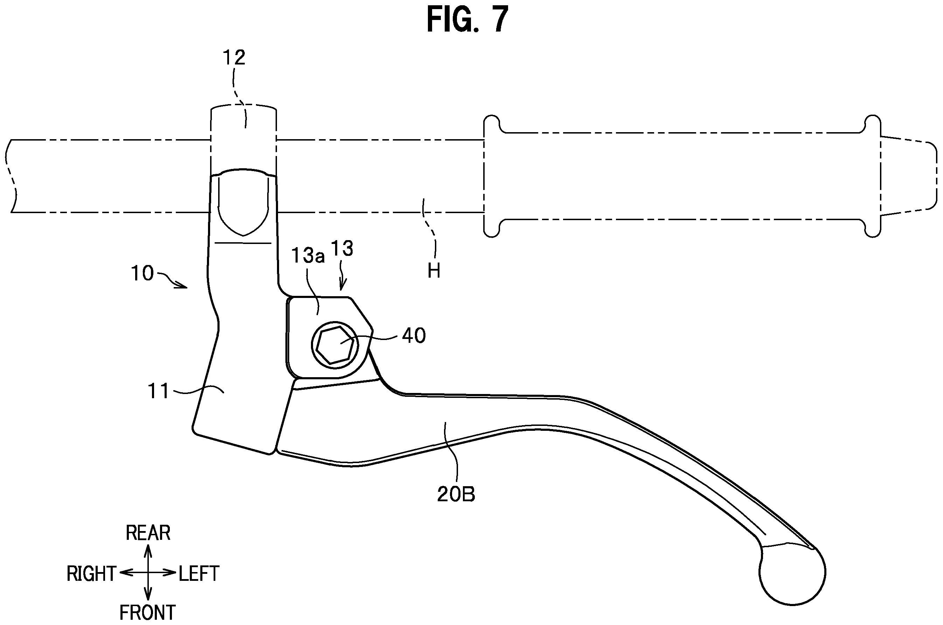

In the vehicle control device 1B according to the second embodiment, as shown in FIG. 7, the pivot 40 is fixed to the holder body 11, and the brake lever 20B is freely rotatable about an axis of the pivot 40. Then, when the brake lever 20B is rotated from an initial position toward a handlebar H side, the tensile force is applied to the brake cable C to operate the wheel brake B2.

In the operation amount detection device 50 according to the second embodiment, as shown in FIG. 9, the fitting portion 52a of the detection shaft 52 is fitted into the fitting hole 36 of the annular member 35. Then, in the operation amount detection device 50, the rotation angle sensor 51 can detect a rotation amount of the brake lever 20B by detecting a rotation angle of the detection shaft 52. The rotation amount of the brake lever 20B detected by the rotation angle sensor 51 is output to the electronic control device 200B.

Next, a brake control in the vehicle control device 1B according to the second embodiment will be described.

As shown in FIG. 6, the vehicle control device 1B according to the second embodiment includes the electronic control device 200B. The electronic control device 200B includes the storage unit 210, a tensile force calculation unit 260, the determination unit 240, and the brake lamp control unit 250.

The storage unit 210 according to the second embodiment stores tensile force data showing a relation between the rotation amount of the brake lever 20B and the tensile force applied to the brake cable C.

The tensile force calculation unit 260 estimates the tensile force applied to the brake cable C based on the rotation amount of the brake lever 20B.

When the rotation amount of the brake lever 20B is input from the operation amount detection device 50, the tensile force calculation unit 260 calculates an estimated value of the tensile force corresponding to the detected rotation amount based on the tensile force data stored in the storage unit 210.

The estimated value of the tensile force calculated by the tensile force calculation unit 260 is input to, for example, a control unit of a hydraulic pressure control device provided in a hydraulic pressure brake system of another wheel, and an interlocking brake control is executed based on the estimated value of the tensile force.

In the vehicle control device 1B as described above, since the tensile force applied to the brake cable C can be detected without providing a tension sensor on the brake cable C, the number of components of the wheel brake B2 can be reduced.

In addition, in the vehicle control device 1B, the determination unit 240 can determine an adjustment state of the wheel brake B2 based on the rotation amount of the brake lever 20B, and the brake lamp control unit 250 can turn on the brake lamp BL with high accuracy.

As described above, the disclosure is also applicable to the mechanical brake system, and the brake device 1B according to the second embodiment has the same function and effect as those of the vehicle control device 1A (see

FIG. 1) according to the first embodiment.

Similar to the first embodiment, in the vehicle control device 1B according to the second embodiment of the disclosure, modifications can be appropriately made without departing from the scope of the disclosure.

For example, in the vehicle control device 1B according to the second embodiment as well, similarly to the vehicle control device 1A (see FIG. 2) according to the first embodiment, the brake lever 20B may be configured by the lever body and the knocker, and the grip margin adjustment mechanism may be provided.

In addition, in the vehicle control device according to the second embodiment as well, an operation amount detection device may detect a rotation amount of a clutch lever, and an electronic control device may determine an adjustment state of a clutch based on the rotation amount of the clutch lever.

### Reference Sign List

1A vehicle control device (first embodiment)
1B vehicle control device (second embodiment)
10 holder
11 holder body
13 lever connection portion
13c pivot fixing hole
13d shaft insertion hole
20A brake lever (first embodiment)
20B brake lever (second embodiment)
21 lever body
22 knocker
23 grip margin adjustment mechanism
23a dial
25 pivot insertion hole
30 annular member (first embodiment)
31 bottom portion
32 bearing hole
33 fitting hole
35 annular member (second embodiment)
36 fitting hole
40 pivot
41 support shaft portion
42 bolt portion
50 operation amount detection device
51 rotation angle sensor
52 detection shaft
52a fitting portion
52b detection portion
60 master cylinder
61 cylinder
62 reservoir
100 hydraulic pressure control device
110 substrate
200A electronic control device (first embodiment)
200B electronic control device (second embodiment)
210 storage unit
220 hydraulic pressure calculation unit
230 control unit
240 determination unit
250 brake lamp control unit
260 tensile force calculation unit
B1 wheel brake (first embodiment)
B2 wheel brake (second embodiment)
BL brake lamp
C brake cable
H handlebar
IS ignition switch
W wheel cylinder

## Claims

1. An operation amount detection device for a vehicle with handlebar in which a pivot fixed to a holder attached to a vehicle body is inserted into one end of a pivot insertion hole of an operator, and the operator is freely rotatable about an axis of the pivot, the operation amount detection device comprising:
a rotation angle sensor fixed to the holder; and
a detection shaft fitted into another end of the pivot insertion hole, wherein
a center axis of the pivot and a center axis of the detection shaft are arranged coaxially,
the operator and the detection shaft co-rotate, and
the rotation angle sensor is configured to detect a rotation angle of the detection shaft.

2. The operation amount detection device for the vehicle with handlebar according to claim 1, wherein
an annular member is press-fitted into the pivot insertion hole,
the detection shaft is fitted into the annular member, and
the operator, the annular member, and the detection shaft co-rotate.

3. The operation amount detection device for the vehicle with handlebar according to claim 1, wherein
the operator includes:
a lever body;
a knocker connected to a master cylinder or a connection member; and
a grip margin adjustment mechanism configured to adjust a position of the lever body with respect to the knocker about the axis of the pivot, wherein
the pivot insertion hole is formed in the lever body and the knocker, and
the lever body and the knocker are freely rotatable about the axis of the pivot.

4. The operation amount detection device for the vehicle with handlebar according to claim 3, wherein
an annular member is press-fitted into the lever body and the pivot insertion hole of the knocker,
the detection shaft is fitted into the annular member, and
the lever body, the knocker, the annular member, and the detection shaft co-rotate.

5. The operation amount detection device for the vehicle with handlebar according to claim 2 or 4, wherein
a fitting hole having a polygonal shaft cross section is formed in the annular member,
a fitting portion having a polygonal shaft cross section is formed on the detection shaft, and
the fitting portion of the detection shaft is fitted into the fitting hole of the annular member.
